# FASCICULE DE BREVET EUROPEEN

(11) **EP 0 486 343 B1**
(45) Date de publication et mention de la délivrance du brevet: **21.02.1996**
(21) Numéro de dépôt: 91402814.7
(22) Date de dépôt: 22.10.1991
(51) Int. Cl.: F16C 25/08, F16C 33/41

(54) **Roulement perfectionné à précontrainte**
Vorgespanntes Wälzlager
Preloaded rolling contact bearing

(30) Priorité: 08.11.1990 FR 9013854
(43) Date de publication de la demande: 20.05.1992
(73) Titulaire: NADELLA, F-18102 Vierzon (FR)
(72) Inventeur: Labedan, Jean-Denis, F-18000 - Bourges (FR)
(74) Mandataire: Polus, Camille

(56) Documents cités:
- DE-A- 2 032 111
- FR-A- 890 552
- FR-A- 2 628 160
- GB-A- 2 147 957
- US-A- 3 554 621

## Description

La présente invention concerne les roulements, notamment à billes, à précontrainte et, plus particulièrement ceux d'entre eux où la précontrainte est réglable entre une première valeur permettant le maintien des éléments roulants à l'état non monté et le montage du roulement et une deuxième valeur où la précontrainte est celle nécessaire à un bon fonctionnement.

Les roulements à précontrainte sont bien connus dans la technique.

Parmi ceux-ci, certains d'entre eux sont d'un type où au moins l'une des bagues est divisée en deux parties qui sont emboîtées mobiles librement l'une dans l'autre pour transmettre la précontrainte. Un roulement de cette nature est par exemple exposé dans la demande de brevet français 2 594 189.

On connait tous les avantages qu'apporte ce type de roulement. Il permet un rattrapage automatique du jeu, il est autocentreur et autoadaptatif de la contrainte.

Toutefois, ce type de roulement s'il donne satisfaction pour de nombreuses applications présente néanmoins des difficultés de mise en oeuvre. C'est en particulier le cas lorsque la pièce mâle et/ou la pièce femelle entre lesquelles ce roulement est destiné à être placé est d'une nature telle que cette pièce peut présenter elle-même, une piste pour le roulement.

Dans un tel cas, les qualités de cette pièces, éventuellement après avoir reçu un traitement approprié par exemple thermique, la rendent apte à être utilisée directement comme piste de contact sur laquelle roulent les éléments de roulement telles des billes. Dans une telle situation, le montage pose des problèmes spécifiques car la précontrainte augmente momentanément lors de l'assemblage et les caractéristiques de montage et de fonctionnement sont alors souvent incompatibles. En effet, si l'on satisfait aux conditions du montage pour que celui-ci soit relativement aisé, le roulement risque de se séparer spontanément sous l'effet d'un effort à composante axiale opposée à celle du montage et la sécurité n'est pas assurée. Inversement, si l'on satisfait aux conditions du fonctionnement et si la sécurité est obtenue, l'effort à développer au montage est considérable et en dehors de ceux communément admis ou utilisés.

Pour remédier à ce type de difficultés avec un roulement du genre précédemment indiqué, il faut donc faire en sorte que ce roulement présente un premier état où l'on peut procéder à son montage et un deuxième état, différent du premier où une fois le roulement monté, celui-ci possède les caractéristiques nécessaires à son fonctionnement normal. Une solution est par exemple exposée dans la demande de brevet français 2 628 160 . Toutefois, la solution qui y est proposée n'a pas l'universalité attendue.

En effet, on a pu observer qu'au moment de l'assemblage, les éléments de roulement de ce roulement ont une certaine tendance à s'échapper soit spontanément, soit sous l'action de la précontrainte du premier état même si cette dernière est pratiquement inactive. On a aussi pu observer que l'organe élastique du dispositif élastique de ce roulement qui assure la précontrainte est relativement complexe aussi bien de fabrication que de montage et d'assemblage. On a aussi observé que lorsque les moyens de retenue du dispositif de précontrainte de ce roulement sont constitués d'un mécanisme à encliquetage, la mise en place de l'appui est quelque peu délicate, en particulier lorsque le boîtier du roulement est fait d'une douille relativement mince qui a été durcie par un procédé de trempe afin qu'elle puisse servir directement de piste de roulement pour des éléments de roulement et que de ce fait, la butée ne présente plus une souplesse, une élasticité convenable.

Le but de l'invention est de remédier à la plupart des inconvénients rappelés brièvement.

L'invention a pour objet un roulement perfectionné précontraint comprenant, entre autres, un boîtier, des éléments de roulement circulant suivant deux pistes circulaires, au moins une bague constituée de deux parties sur chacune desquelles est située l'une de ces pistes et qui sont emboîtées mobiles librement l'une dans l'autre de manière à pouvoir coulisser axialement et un dispositif élastique coopérant avec ce boîtier et au moins l'une de ces parties de manière à solliciter axialement l'une vers l'autre ces deux pistes circulaires pour exercer une précontrainte et où ces éléments de roulement sont destinés à venir s'appuyer sur un autre organe suivant au moins une autre piste circulaire, et où ce dispositif élastique de précontrainte est réglable entre un premier état où la précontrainte est pratiquement inactive pour permettre de placer les éléments de roulement au contact de cette autre piste de cet autre organe et un second état où la précontrainte est active pour permettre aux éléments de roulement placés au contact de ces trois pistes au moins de circuler avec la précontrainte requise au fonctionnement normal.

Ce roulement perfectionné précontraint est remarquable en ce qu'il comprend une cage faite d'un anneau et de couples de bras portés par cet anneau d'un côté de celui-ci et orientés axialement et pourvus de sièges ménagés au moins sur ces bras pour y recevoir les éléments de roulement de manière que ces éléments de roulement puissent en outre se déplacer relativement aux deux parties de la bague axialement et radialement au moins lorsque le dispositif élastique est dans son premier état.

D'autres caractéristiques de l'invention ressortiront de la lecture de la description et des revendications qui suivent et de l'examen du dessin annexé, donné seulement à titre d'exemple, où :
- la Figure 1 est une coupe axiale méridienne partielle d'un mode de réalisation du roulement perfectionné précontraint selon l'invention dans son premier état;
- la Figure 2 est une vue analogue à celle de la Figure 1 où ce roulement est représenté dans son second état;
- la Figure 3 est une vue analogue à celle de la Figure 1 d'une variante d'exécution où ce roulement est dans un état intermédiaire qu'il franchit lors de son assemblage;
- la Figure 4 est une vue partielle de détail de la variante d'exécution du mode de réalisation de la Figure 3;
- la Figure 5 est une vue de détail analogue à celle de la Figure 4 du mode de réalisation des Figures 1 et 2; et
- les Figures 6 et 7 sont des vues de détail de deux variantes d'exécution.

Les roulements précontraints, notamment à billes, sont bien connus dans la technique. C'est pourquoi dans la description qui suit, n'est exposé que ce qui concerne directement ou indirectement l'invention. Pour le surplus, le spécialiste du domaine concerné puisera dans les solutions courantes classiques à sa disposition pour faire face aux problèmes particuliers auxquels il est confronté.

Dans la suite, on utilise toujours un même numéro de référence pour identifier des éléments homologues quel que soit le mode réalisation de l'invention et sa variante d'exécution.

Pour la commodité de l'exposé, on décrit successivement chacun des constituants d'un roulement perfectionné précontraint selon l'invention avant d'en exposer le montage, l'assemblage et le fonctionnement.

Dans ce qui suit, on suppose qu'un roulement perfectionné précontraint selon l'invention est destiné à être utilisé avec un arbre muni d'une gorge qui sert directement d'autre organe avec une piste de roulement circulaire. Il est clair que l'invention peut être transposée aisément de manière qu'un roulement suivant l'invention ne coopère pas avec un arbre placé axialement à son intérieur mais avec un alésage qui est alors placé à son pourtour. Les transpositions sont aisées sans pour autant modifier l'invention.

Un roulement perfectionné précontraint suivant l'invention comprend, pour les modes de réalisation et leurs variantes dessinés un boîtier 10, des éléments de roulement 20 telles des billes logées dans un cage 60, une bague 30 faite de deux parties 31 et 32 et un dispositif élastique de précontrainte 50 susceptible de prendre deux états, un premier état où la contrainte est pratiquement inactive pour autoriser le montage et un deuxième état où la contrainte est active de manière à ce que, montage fait, le roulement suivant l'invention puisse fonctionner normalement.

Dans les modes de réalisation illustrés, le boîtier 10 est de préférence à parois minces. Les techniques de fabrication et d'usinage ainsi que de traitement de ce type de boîtier sont classiques.

Comme on le voit pour les modes de réalisation décrits et illustrés, le boîtier 10 est associé directement à l'une 31 des parties de la bague 30. Le boitier 10 et la partie 31 sont, par exemple, faits d'un seul tenant et se présentent à la manière d'une douille. L'autre partie 32 de la bague 30 se présente à la manière d'une coupelle qui peut se déplacer relativement librement dans le boîtier ou douille de manière à pouvoir y coulisser axialement sans risque de coincement ou blocage.

Les éléments de roulement 20, ici des billes, sont destinés à prendre appui sur au moins chacune des parties 31 et 32 suivant des pistes circulaires 231 et 232, respectivement.

Ces éléments de roulement 20 sont aussi destinés à circuler sur au moins une autre piste d'une autre organe . Dans les modes de réalisation illustrés, cette autre organe est un arbre 40 qui présente une autre piste 240 que décrivent les éléments de roulement. Cette piste 240 est par exemple délimitée par une gorge à section droite méridienne en arc de cercle dans le fond de laquelle est ménagé un chenal 242 et qui est bordée d'épaulements 243. L'extrémité libre de l'arbre 40 est, de préférence, munie d'un biseau ou chanfrein 241 pour les raisons que l'on comprendra par la suite.

Le dispositif élastique de précontrainte 50 dont est équipé le roulement perfectionné précontraint selon l'invention est réglable entre deux états. Un premier état où la précontrainte est pratiquement inactive pour permettre le montage du roulement, ici l'enfilage de l'arbre, et un deuxième état où la précontrainte est active pour, montage fait, permettre un fonctionnement normal du roulement avec la précontrainte requise au bon usage. Le dispositif élastique de précontrainte réglable comprend un appui 51, des moyens de retenue 52 et un organe élastique 53.

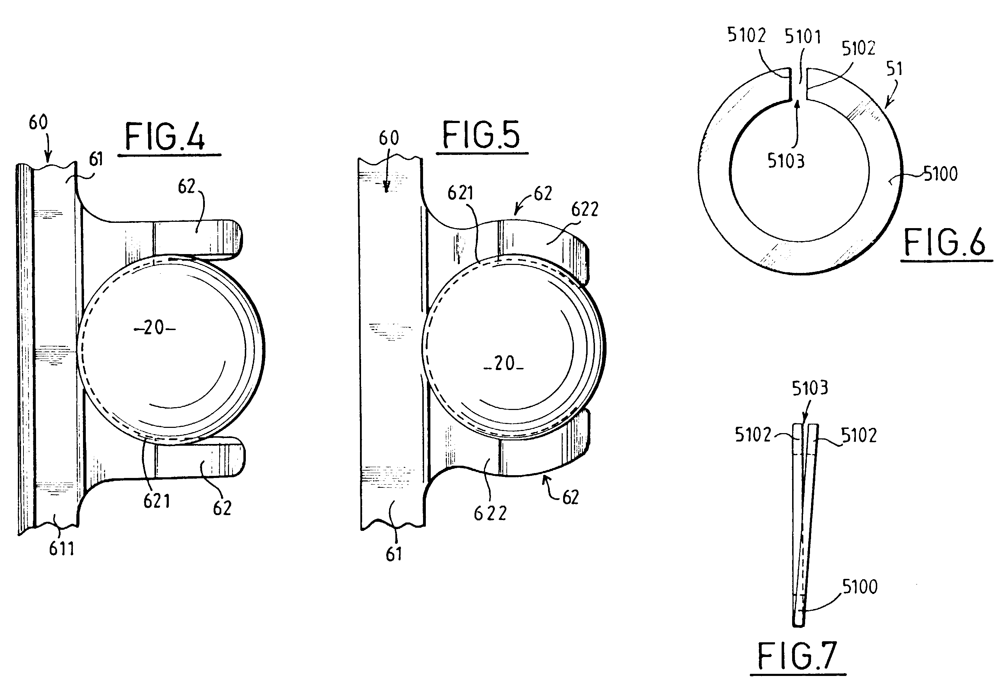

L'appui 51 se présente à la manière d'une rondelle 5100 avec une fente 5101 qui est délimitée par deux tranches 5102 approximativement radiales. Comme cela apparaît sur la Figure 6, cette rondelle est plane et ses deux tranches sont pratiquement coplanaires et disposées en vis-à-vis l'une de l'autre avec un certain jeu 5103. On reviendra sur le rôle de ce jeu ultérieurement. Sur la variante d'exécution illustrée sur la Figure 7, la rondelle n'est plus plane mais gauche et ses deux tranches 5102 ne sont pas coplanaires. De la sorte, les tranches n'étant plus en vis-à-vis, ces tranches peuvent passer l'une au-dessus de l'autre sans se rencontrer lorsqu'on tend à les rapprocher pour les raisons qui apparaîtront par la suite. Ceci tient lieu de jeu.

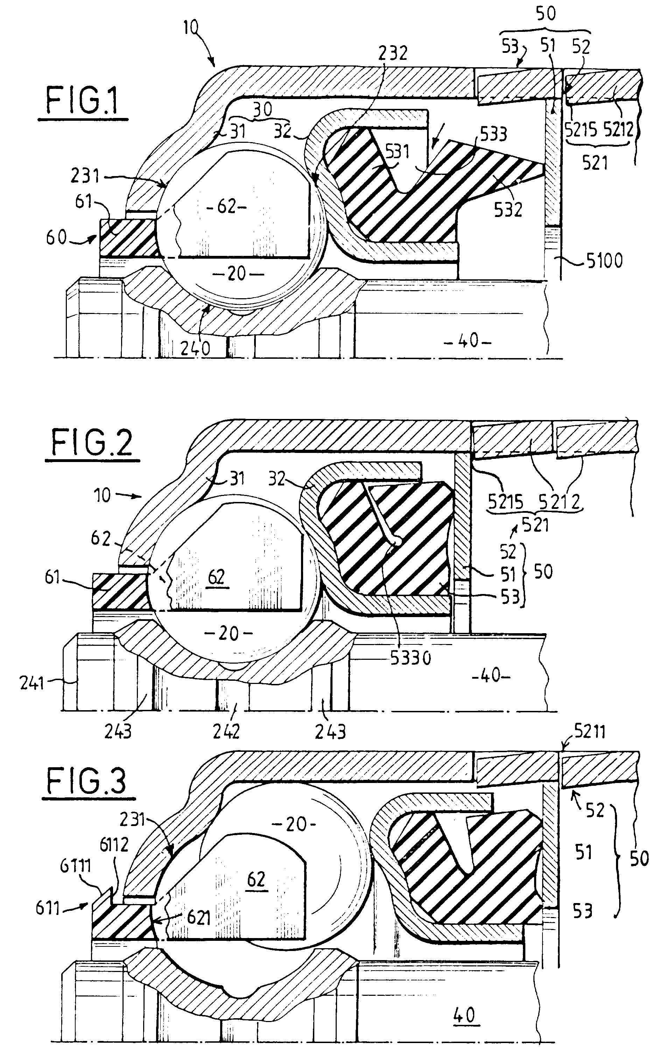

Les moyens de retenue 52 sont destinés à assujettir l'appui 51 au boîtier 10. Ces moyens de retenue permettent de faire prendre au dispositif élastique de précontrainte l'un ou l'autre de ses deux états. Ces moyens de retenue sont constitués par un mécanisme à encliquetage 521. Ce mécanisme à encliquetage comprend au moins deux butées 5211 successives telles des pattes 5212 et une arête 5215 de la rondelle 5100 comme illustré sur les Figures 1, 2 et 3. Les pattes 5212 sont par exemple obtenues par emboutissage, avec ou sans découpe de la douille 10, de manière à être progressivement saillante à l'intérieur du boîtier 10 dans un sens qui va croissant de l'extérieur vers l'intérieur de la douille en direction axiale. Ces pattes sont par exemple régulièrement distribuées sur des cercles successifs, et les pattes de deux cercles successifs sont soit dans un même plan méridien comme illustré sur les Figures 1, 2 et 3, soit dans les plans méridiens décalés angulairement de manière à ne pas être à la suite les unes des autres.

Comme cela apparaît particulièrement bien sur les Figures 1 et 2 notamment, l'organe élastique 53 est de configuration toroïdale et présente un tampon 531 destiné à coopérer avec la partie 32 de la bague 30 qui est mobile axialement, et aussi un patin 532 qui est destiné à coopérer avec l'appui 51 en rondelle 5100. Ces tampon 531 et patin 532 sont séparés par une saignée 533. Comme on peut l'observer sur la Figure 1, lorsque le dispositif de précontrainte est dans son premier état, la saignée 533 est béante. Au contraire, lorsque le dispositif de précontrainte est dans son second état comme illustré sur la Figure 2, la saignée 533 est pratiquement close comme cela est apparent. Un interstice 5330 est figuré seulement pour la commodité de l'illustration et de l'exposé qui suit.

Comme on le voit, la cage 60 est faite d'un anneau 61 et de couples de bras 62 portés par cet anneau au moins d'un côté de celui-ci; seul un couple de bras a été dessiné mais il est clair que de tels couples sont répartis tout autour de l'anneau et, de préférence, régulièrement distribués. Ces bras 62 qui sont orientés axialement sont aménagés de manière à former, sur au moins ceux-ci, des sièges 621 de préférence en calotte sphérique pour recevoir les éléments de roulement 20. Ces sièges sont tels que les éléments de roulement 20 peuvent se déplacer relativement aux parties 31 et 32 de la bague 30 notamment axialement et radialement en plus de leurs évolutions naturelles lorsque le roulement perfectionné précontraint selon l'invention fonctionne normalement. Pour le mode de réalisation illustré sur les Figures 1, 2 et 5, les bras 62 forment des pinces 622 et la cage 60 est montée mobile entre la bague 30 et l'arbre 40. De la sorte, les bras sont tels qu'ils n'autorisent les éléments de roulement 20 qu'à se déplacer pratiquement que radialement pour quitter leur siège. Pour la variante d'exécution illustrée sur les Figures 3 et 4, l'anneau 61 est muni d'un bec 611 avec une rampe 6111 et un arrêtoir 6112. La rampe permet la mise en place de la cage par déformation élastique et l'arrêtoir immobilise axialement la cage relativement à la bague et l'autre organe entre lesquels elle est placée . Comme cela ressort particulièrement bien des Figures 3 et 4, les éléments de roulement reposent sur leur siège entre les bras d'une manière telle qu'ils sont autorisés à se déplacer axialement et radialement pour quitter leur siège.

En position initiale, un roulement perfectionné précontraint selon l'invention se trouve dans la situation où il est illustré sur la Figure 1 ou la Figure 3. Dans cette situation, le dispositif élastique de précontrainte est dans son premier état. Si maintenant, on met en place l'arbre 40, le dispositif de précontrainte prend un état intermédiaire comme illustré sur la Figure 3. Les éléments de roulement ou billes initialement retenus dans la cage entre les bras et reposant sur leur siège, sont refoulés momentanément vers l'extérieur, le chanfrein facilitant l'introduction et la mise en place de l'arbre 40, ceci à l'encontre de la sollicitation de l'organe élastique. Ensuite, les billes viennent s'engager et reposer dans la gorge de l'arbre et reprennent leur position initiale sous la sollicitation de l'organe élastique qui les refoule.

Grâce à la configuration de la cage, on comprend que les billes ont pu se déplacer à la fois radialement et axialement pour permettre l'introduction et la mise en place de l'arbre.

Pour faire passer le dispositif élastique de précontrainte de son premier état de la Figure 1 ou 3 à celui de la Figure 2 où il est dans son second état, il suffit d'agir sur l'appui afin que son arête repose non plus contre la patte la plus extérieure axialement mais contre la patte suivante, comme illustré. Comme on l'a indiqué et pour les raisons qui ont été exposées, les pattes 5212 ne sont ni suffisamment flexibles, ni suffisamment élastiques du fait des traitements subis par la douille pour autoriser ce changement d'état. C'est donc la rondelle 5100 qui présente cette élasticité. Lorsqu'on repousse la rondelle à l'aide de tout outil approprié en direction des éléments de roulement et avec un effort suffisant, la pente des pattes tend à faire se rapprocher les tranches de la fente. Si les tranches sont suffisamment éloignées l'une de l'autre par un jeu 5103 suffisant comme illustré sur la Figure 6, elles pourront se rapprocher sans se toucher pour échapper aux pattes. Si ce n'est pas le cas et si le jeu est insuffisant et que la rondelle est gauche comme illustré sur la Figure 7, les tranches s'éviteront tout en se rapprochant puisque dans des plans différents et permettront le franchissement des pattes. Ces pattes franchies, l'élasticité inhérente de la rondelle lui fait reprendre sa configuration initiale où elle occupe la totalité du diamètre intérieur de la douille tout en prenant appui contre les pattes par son arête.

Dans la position où le roulement perfectionné précontraint selon l'invention est illustré sur la Figure 1, l'organe élastique n'exerce pratiquement qu'un petit effort axial sur l'appui 51 à l'aide de son patin 532. Lorsque l'appui est repoussé pour le faire passer dans la position où il illustré sur la Figure 2, le patin 532 est déformé et comprimé pour venir au contact du tampon 531 en faisant en sorte que la saignée 533, initialement béante ait pratiquement disparu. On observera que le volume initial du patin est tel que lorsqu'il occupe son deuxième état illustré sur la Figure 2, il occupe pratiquement tout l'espace laissé initialement libre à l'intérieur de la partie mobile de la douille et délimité par l'appui.

Le choix du matériau dont est fait l'organe élastique et le volume que doit combler le patin permettent de régler la valeur de la précontrainte nécessaire au fonctionnement. Pour parvenir à ceci, il suffit que l'écart entre les deux positions de la rondelle soit supérieur à l'écart qui sépare la partie mobile de la bague de roulement entre sa position de montage (Figure 3) et celle qu'elle occupe en position de fonctionnement (Figure 2).

De préférence, le boîtier est en métal, la cage en matière synthétique et l'organe élastique en élastomère.

On comprend donc tout l'intérêt du roulement perfectionné précontraint selon l'invention.

## Revendications

1. Roulement précontraint comprenant un boîtier (10), des éléments de roulement (20) circulant suivant deux pistes circulaires, au moins une bague (30) constituée de deux parties (31, 32) sur chacune desquelles est située l'une de ces pistes (231, 232) et qui sont emboîtées mobiles librement l'une dans l'autre de manière à pouvoir coulisser axialement et un dispositif élastique (50) coopérant avec ce boîtier (10) et au moins l'une de ces parties (31, 32) de manière à solliciter axialement l'une vers l'autre ces deux pistes circulaires (231, 232) pour exercer une précontrainte et où ces éléments de roulement (20) sont destinés à venir s'appuyer sur une autre organe (40) suivant au moins une autre piste (240) circulaire et où ce dispositif élastique de précontrainte (50) est réglable entre un premier état où la précontrainte est pratiquement inactive pour permettre de placer les éléments de roulement (20) au contact de cette autre piste (240) de cette autre organe (40) et un second état où la précontrainte est active pour permettre aux éléments de roulement (20) placés au contact de ces trois pistes (231, 232, 240) au moins de circuler avec la précontrainte requise au fonctionnement normal, ce roulement étant caractérisé en ce qu'il comprend une cage (60) faite d'un anneau (61) et de couples de bras (62) portés par cet anneau (61) d'un côté de celui-ci et orientés axialement et pourvus de sièges (621) ménagés au moins sur ces bras (62) pour y recevoir les éléments de roulement (20) de manière que ces éléments de roulement (20) puissent en outre se déplacer relativement aux deux parties (31, 32) de la bague (30) axialement et radialement au moins lorsque le dispositif élastique est dans son premier état.

2. Roulement selon la revendication 1, caractérisé en ce que la cage (60) est montée mobile axialement entre la bague (30) et l'autre organe (40) et en ce que les bras (62) d'un couple forment des pinces (622) qui n'autorisent les éléments de roulement (20) qu'à se déplacer pratiquement que radialement pour quitter leurs sièges (621).

3. Roulement selon la revendication 1, caractérisé en ce que l'anneau (61) porte un bec (611) destiné à coopérer avec l'une (31) des parties (31, 32) de la bague (30) de manière à immobiliser axialement la cage (60) relativement à la bague (30) et l'autre organe (40) entre ceux-ci et en ce que les bras (62) autorisent les éléments de roulement (20) à se déplacer axialement et radialement pour quitter leurs sièges (621).

4. Roulement selon la revendication 3, caractérisé en ce que le bec (611) est muni d'une rampe (6111) pour sa mise en place sur celle (31) des parties de la bague (30) avec laquelle elle coopère et d'un arrêtoir (6112) pour fixer la position axiale de la cage (60) relativement à la bague (30) et l'autre organe (40).

## Patentansprüche

1. Vorgespanntes Wälzlager, mit einem Gehäuse (10), Wälzelementen (20), die auf zwei kreisförmigen Bahnen umlaufen, wenigstens einem Ring (30), der aus zwei Teilen (31, 32) gebildet ist, wobei sich auf jedem von diesen eine dieser Bahnen (231, 232) befindet und die frei beweglich in der Weise ineinander eingesetzt sind, daß sie axial gleiten können, und einer elastischen Vorrichtung (50), die mit diesem Gehäuse (10) und mit wenigstens einem dieser Teile (31, 32) in der Weise zusammenwirkt, daß sie diese zwei kreisförmigen Bahnen (231, 232) zueinander axial vorbelastet, um eine Vorspannung auszuüben, wobei diese Wälzelemente (20) dazu vorgesehen sind, sich auf einem anderen Element (40) auf wenigstens einer anderen kreisförmigen Bahn (240) abzustützen, und wobei diese elastische Vorspannungsvorrichtung (50) zwischen einem ersten Zustand, in dem die Vorspannung im wesentlichen inaktiv ist, um die Anordnung der Wälzelemente (20) in Kontakt mit dieser anderen Bahn (240) dieses anderen Elements (40) zu ermöglichen, und einem zweiten Zustand, in dem die Vorspannung aktiv ist, um den Wälzelementen (20), die mit diesen drei Bahnen (231, 232, 240) in Kontakt sind, zu ermöglichen, wenigstens mit der für den Normalbetrieb erforderlichen Vorspannung umzulaufen, einstellbar ist, wobei dieses Wälzlager dadurch gekennzeichnet ist, daß es einen Käfig (60) enthält, der aus einem Ring (61) und Paaren von Armen (62) hergestellt ist, die durch diesen Ring (61) auf einer seiner Seiten getragen werden und die axial orientiert sind und mit Sitzen (621) versehen sind, die wenigstens an diesen Armen (62) ausgebildet sind, um hier die Wälzelemente (20) in der Weise aufzunehmen, daß sich diese Wälzelemente (20) außerdem relativ zu den zwei Teilen (31, 32) des Rings (30) axial und radial wenigstens dann verschieben können, wenn sich die elastische vorrichtung in ihrem ersten Zustand befindet.

2. Wälzlager nach Anspruch 1, dadurch gekennzeichnet, daß der Käfig (60) axial beweglich zwischen dem Ring (30) und dem anderen Element (40) angebracht ist und daß die Arme (62) eines Paars Klemmvorrichtungen (622) bilden, die nur zulassen, daß sich die Wälzelemente (20) radial verschieben, um ihre Sitze (621) zu verlassen.

3. Wälzlager nach Anspruch 1, dadurch gekennzeichnet, daß der Ring (61) eine Nase (611) trägt, die dazu vorgesehen ist, mit einem (31) der Teile (31, 32) des Rings (30) in der Weise zusammenzuwirken, daß der Käfig (60) axial relativ zum Ring (30) und zum anderen Element (40) unbeweglich ist, und daß die Arme (62) zulassen, daß sich die Wälzelemente (20) axial und radial verschieben, um ihre Sitze (621) zu verlassen.

4. Wälzlager nach Anspruch 3, dadurch gekennzeichnet, daß die Nase (611) mit einer Rampe (6111) für ihre Anordnung auf demjenigen (31) der Teile des Rings (30), mit dem sie zusammenwirkt, sowie mit einem Anschlag (6112) für die Fixierung der axialen Position des Käfigs (60) relativ zum Ring (30) und zum anderen Element (40) versehen ist.

## Claims

1. Preloaded rolling bearing comprising a shell (10), bearing members (20) circulating in accordance with two circular tracks, at least one ring (30) comprising two portions (31, 32) on each of which there is located one of the said tracks (231, 232), and which are inserted to be freely movable one in the other, so as to be able to slide axially, and a resilient device (50) co-operating with said shell (10) and at least one of these portions (31, 32) so as to urge said circular tracks (231, 232) axially one towards the other in order to exert a preloading effort, and in which the said bearing members (20) are intended to come into contact with another device (40) in accordance with at least one other circular track (240), and in which this resilient preloading device (50) is adjustable between a first condition in which the preloading is practically inactive, in order to enable the bearing members (20) to be placed in contact with said other track (240) of said other device (40), and a second condition in which the preloading is active in order to enable the bearing members (20) placed in contact with the said three tracks (231, 233, 240) at least to circulate with the required extent of preloading required for normal operation, this bearing being characterised in that it comprises a cage (60) made up of a collar (61) and of pairs of arms (62) carried by said collar (61) on one side of the latter and oriented axially, and provided with seats (621) produced at least on said arms (62) in order to receive the bearing members (20) at that point, so that said bearing members (20) can in addition move axially and radially relative to the two portions (31, 32) of the ring (30), at least when the resilient device is in its first condition.

2. Rolling bearing according to claim 1, characterised in that the cage (60) is mounted so as to be axially movable between the ring (30) and the other device (40), and in that the arms (62) of a pair form clips (622) which permit the bearing members (20) to move practically only radially in order to leave their seats (621).

3. Rolling bearing according to claim 1, characterised in that the collar (1 ) carries a tip (611) intended to co-operate with one (31) of the portions (31, 32) of the ring (30) and of the other device (40), so as axially to immobilise the cage (60) relative to the ring (30) and the other device (40) between the latter, and in that the arms (62) permit the bearing members (20) to move axially and radially in order to leave their seats (621).

4. Rolling bearing according to claim 3, characterised in that the tip (611) is equipped with an inclined face (6111) for positioning it on that one (31) of the portions of the ring (30) and of the other device (40) with which it co-operates, and is further equipped with a stop means (6112) in order to fix the axial position of the cage (60) relative to the ring (3) and to the other device (40).
